(19) Europäisches Patentamt / European Patent Office / Office européen des brevets

(11) **EP 3 470 218 B1**

(12) **EUROPEAN PATENT SPECIFICATION**

(45) Date of publication and mention
of the grant of the patent:
**11.11.2020 Bulletin 2020/46**

(21) Application number: **17810601.9**

(22) Date of filing: **12.06.2017**

(51) Int Cl.:
*E04C 2/16* (2006.01)    *D04H 1/435* (2012.01)
*D04H 1/541* (2012.01)    *B32B 5/02* (2006.01)
*B32B 5/08* (2006.01)    *B32B 15/14* (2006.01)

(86) International application number:
**PCT/KR2017/006081**

(87) International publication number:
**WO 2017/213478 (14.12.2017 Gazette 2017/50)**

(54) **SANDWICH PANEL AND METHOD FOR MANUFACTURING SAME**

SANDWICHPLATTE UND VERFAHREN ZUR HERSTELLUNG DAVON

PANNEAU SANDWICH ET PROCÉDÉ DE FABRICATION DUDIT PANNEAU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.06.2016  KR 20160072149
09.06.2017  KR 20170072712
09.06.2017  KR 20170072733**

(43) Date of publication of application:
**17.04.2019 Bulletin 2019/16**

(73) Proprietor: **LG Hausys, Ltd.
Seoul 07326 (KR)**

(72) Inventors:
• **YU, Dayoung
Anyang-si
Gyeonggi-do 14117 (KR)**
• **LEE, Myung
Suwon-si
Gyeonggi-do 16514 (KR)**
• **LIM, Jiwon
Seoul 05034 (KR)**
• **RHO, Sang Hyun
Anyang-si
Gyeonggi-do 14115 (KR)**
• **KIM, Won
Incheon 21442 (KR)**
• **SONG, Dongmin
Seoul 03975 (KR)**
• **JUNG, Seongmoon
Yuseong-gu, Daejeon 34118 (KR)**

(74) Representative: **Goddar, Heinz J.
Boehmert & Boehmert
Anwaltspartnerschaft mbB
Pettenkoferstrasse 22
80336 München (DE)**

(56) References cited:
EP-A1- 2 889 438          WO-A1-2014/083200
KR-A- 20090 009 222       US-A- 6 080 495
US-A1- 2011 108 218       US-A1- 2016 023 440

**Description**

[Technical Field]

The present invention relates to a sandwich panel.

[Background Art]

Conventional sandwich panels are used in various fields such as construction materials and the like because they are effective for weight lightening while having a structural strength similar to that of a metal panel.
In these sandwich panels, the physical properties of the panels are controlled by forming a core layer between the skin layers formed from aluminum, iron and the like. For example, the weight lightening effect of the panel is increased by using a foamed resin material in the core layer, or the mechanical strength of the panel is increased by using a general resin, a composite or a balsa wood material.
However, such sandwich panels have insufficient weight lightening and mechanical strength and do not have excellent elongation, and thus have a limitation in application of the product. In addition, there is a problem that when the panel is formed by applying an adhesive between the skin layer and the core layer, the interlayer bonding force is weak and the formability is poor.
Korean Registered Patent No. 10-1500036 (Registered on Mar. 02, 2013) can be mentioned as a background technique related to the present invention, and this document discloses a sandwich panel and its manufacturing method.
However, in the case of such a sandwich panel, there is a problem that it is difficult to ensure high-density, high-flexural strength and tension stiffness properties enough to be used as a packaging material for protecting a heavy load of cargo or the like.
Further, since the adhesive force between the core layer and the skin layer which are different kind each other in the sandwich panel is deteriorated, there is a problem that the sandwich panel easily peels off due to external load or impact during use.

[Technical Problem]

In view of the above, the inventors of the present invention have performed studies on a sandwich panel using a molded object which improves the adhesion between the respective constituents of the sandwich panel, and the inventors have completed the present invention as a result.
Accordingly, an aspect of the present invention provides a sandwich panel having high density and an improved adhesion between a core layer and a skin layer and not being easily peeled off by external load or impact during use of the sandwich panel.

[Technical Solution]

According to an aspect of the present invention, there is provided a sandwich panel comprising a core layer of non-woven fiber structure having a polyester-based fiber and a binder which has an apparent density of 0.5 g/cm$^3$ to 0.8 g/cm; a skin layer laminated on at least one surface of the core layer; and an adhesive layer for bonding the core layer and the skin layer, wherein the surface roughness(Ra) of the core layer is a range of 5 to 10 $\mu$m.
Herein, the surface roughness(Ra) of the core layer may be a range of 6 to 9 $\mu$m.
Herein, the coefficient of linear expansion of the adhesive layer (ACL: Adhesive Coefficient of Linear expansion), a coefficient of linear expansion of the core layer (CCL: Core Coefficient of Linear expansion), and a coefficient of linear expansion of the skin layer (SCL: Skin Coefficient of Linear expansion) may satisfy equation 1 and equation 2 below.

[Equation 1]

$$1.6 \leq ACL/CCL \leq 3.0$$

[Equation 2]

$$3.0 \leq CCL/SCL \leq 6.5$$

Herein, the coefficient of linear expansion of the adhesive layer (ACL: Adhesive Coefficient of Linear expansion), a coefficient of linear expansion of the core layer (CCL: Core Coefficient of Linear expansion), and a coefficient of linear expansion of the skin layer (SCL: Skin Coefficient of Linear expansion) may satisfy equation 3 and equation 4 below.

$$[Equation\ 3]$$

$$2.0{\leq}ACL/CCL{\leq}2.7$$

$$[Equation\ 4]$$

$$3.5{\leq}CCL/SCL{\leq}5.0$$

Herein, the the binder may be non-hygroscopic copolymer resin or hygroscopic copolymer resin.

Herein, the core layer may have a flexural modulus of 1.0 GPa to 1.5 GPa and a tension stiffness of 1.0 GPa to 1.8 GPa.

Herein, the core layer may have a tensile elongation of 10% to 30%.

Herein, the core layer may have a peel-off strength of 150 N to 200 N.

Herein, the polyester-based fiber may be any one or more selected from the group consisting of polyethylene terephthalate (PET), polytrimethylene terephthalate, polybutylene terephthalate and polyethylene naphthalate.

Herein, the non-hygroscopic copolymer resin may have a weight change rate of less than 0.1% after keeping a constant temperature/constant humidity for 100 hours at a temperature of 85°C and relative humidity of 85%.

Herein, the polyester-based fiber may have a melting point of 180°C to 300°C.

Herein, the binder may have a melting point of 160°C or higher.

Herein, the panel may further comprise a sheath-core type bicomponent fiber including a core part of a polyester-based fiber; and a sheath part which is a non-hygroscopic copolymer resin surrounding the core part.

Herein, the thickness of the core layer may be a range of 0.1 to 10mm.

Herein, the thickness of the skin layer may be a range of 0.1 to 0.5mm.

Herein, the skin layer may be at least one selected from the group consisting of aluminum, iron, stainless steel (SUS), magnesium and electro galvanized steel sheet (EGI).

Herein, the adhesive layer may include at least one of an olefin-based adhesive, a urethane-based adhesive, an acrylic-based adhesive, and an epoxy-based adhesive.

[Advantageous Effects]

A sandwich panel according to the present invention has high density and an improved adhesion between a core layer and a skin layer and not being easily peeled off by external load or impact during use of the sandwich panel, and therefore, is suited to be used in structural members for home appliances (TV back covers, boards for washing machines, and the like), interior and exterior boards for construction, automotive interior and exterior materials, interior and exterior materials for trains/ships/airplanes, various partition boards, elevator structural members and the like.

[Description of Drawings]

FIG. 1 is an image observing a molded object according to the present invention using Field Emission-Scanning Electron Microscopy (FE-SEM).

FIG. 2 is a photograph of a core layer of a sandwich panel according to the present invention observed by FE-SEM (Field Emission-Scanning Electron Microscopy).

FIG. 3 is a photograph of a cross section of a sandwich panel according to the present invention observed by FE-SEM (Field Emission-Scanning Electron Microscopy).

[Best Mode]

The advantages and features of the present invention, and the method of accomplishing them, will become apparent with reference to the following detailed description in conjunction with the accompanying drawings. However, the present invention is not limited to the embodiments disclosed below but may be embodied in various different forms. Rather, these embodiments are provided only so that this disclosure will be thorough and complete and will fully convey the scope of the invention to those who have ordinary skills in the art. The present invention is only defined by the scope of the claims. The same reference numerals refer to the same elements throughout the specification.

**Sandwich panel**

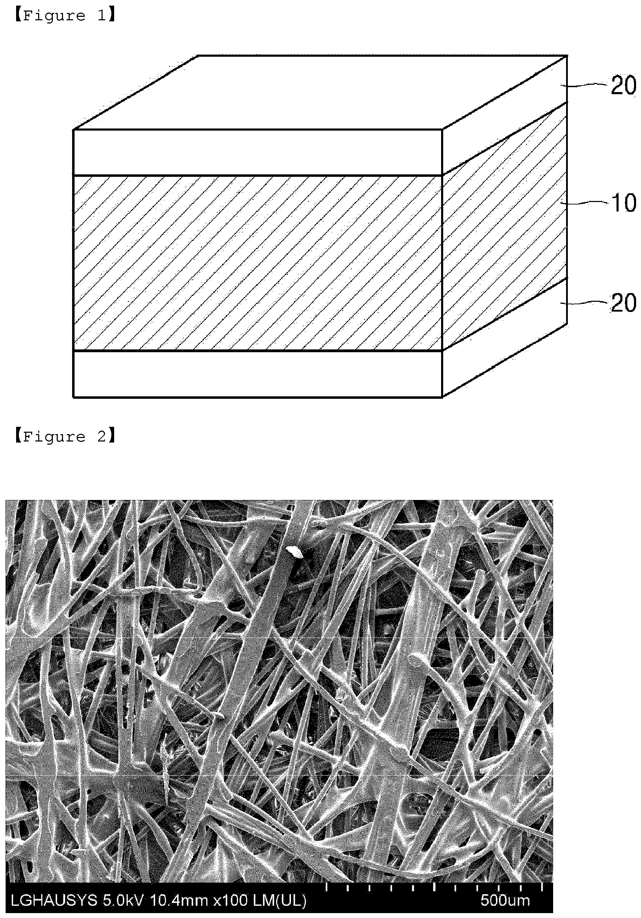

Referring to Fig. 1, the sandwich panel according to the present invention comprises a core layer 10 of non-woven fiber structure having a polyester-based fiber and a binder which has an apparent density of 0.5 g/cm$^3$ to 0.8 g/cm; a skin layer 20 laminated on at least one surface of the core layer; and an adhesive layer 30 for bonding the core layer and the skin layer, wherein the surface roughness(Ra) of the core layer is a range of 5 to 10 $\mu$m.

As a result of experiments conducted by the inventors of the present invention, in the case of the conventional sandwich panels, physical properties such as flexural strength and tensile strength are lowered and especially, since the adhesive force between the core layer and the skin layer which are different kind each other in the sandwich panel is deteriorated, there is a problem that the sandwich panel easily peels off due to external load or impact during use, and thus there has been a need for improvement for use in structural materials for home appliances (TV back covers, washing machine boards, etc.), interior and exterior boards for buildings, interior and exterior materials for cars, interior and exterior materials for trains, ships and airplanes, various partition boards, elevator structural materials and the like.

However, the present inventors have come to manufacture a sandwich panel improved a physical properties such as the flexural strength and the tensile strength, by manufacturing the sandwich panel comprises a core layer 10 of non-woven fiber structure having a polyester-based fiber and a binder which has an apparent density of 0.5 g/cm$^3$ to 0.8 g/cm$^3$.

In addition, the adhesive strength between the core layer and the skin layer, which are different kind each other, is improved in the structure of the sandwich panel, so that even when the sandwich panel is used for a long time in a high temperature and high humidity environment, peeling is not easily caused by external load or impact during use of the sandwich panel. As a result, it has become possible to manufacture sandwich panels suitable for use as living materials or industrial materials.

Further, the sandwich panel according to the present invention limits the surface roughness (Ra) of the core layer and adjusts the surface roughness of the core layer surface that is in contact with the adhesive layer. Therefore, the adhesive layer is sufficiently impregnated in the core layer, so that peeling does not occur. Further, the adhesive strength to the skin layer can be improved, and the problem of delamination in the sandwich panel can be reduce

In the sandwich panel according to the present invention, the surface roughness (Ra) of the core layer satisfies the range of 5 to 10 $\mu$m. Therefore, the peel strength between the core layer, the skin layer and the adhesive layer is improved, and the peel strength can be in the range of 150 to 200 N, preferably in the range of 160 to 180 N. Herein, the peel strength of the core layer is measured on the basis of KSF 4737.

If the surface roughness (Ra) of the core layer is less than 5 $\mu$m), there is no effect of improving the adhesion. If the surface roughness Ra of the core layer is more than 10 $\mu$m, the adhesive layer cannot sufficiently fill the inside and becomes void.

Also, in the sandwich panel according to the present invention, the coefficient of linear expansion of the adhesive layer (ACL: Adhesive Coefficient of Linear expansion), a coefficient of linear expansion of the core layer (CCL: Core Coefficient of Linear expansion), and a coefficient of linear expansion of the skin layer (SCL: Skin Coefficient of Linear expansion) may satisfy equation 1 and equation 2 below,

[Equation 1]

$$1.6 \leq ACL/CCL \leq 3.0$$

[Equation 2]

$$3.0 \leq CCL/SCL \leq 6.5$$

Peferably, may satisfy equation 3 and equation 4 below,

[Equation 3]

$$2.0 \leq ACL/CCL \leq 2.7$$

[Equation 4]

$$3.5 \leq CCL/SCL \leq 5.0$$

Since the core layer, the skin layer and the adhesive layer of the sandwich panel according to the present invention satisfy the above-described relationship, the difference in degree of linear expansion due to temperature rise is reduced. Therefore, even used for a long time at a high temperature, the degree of linear expansion between the core layer and the adhesive layer, which share an interface with each other, can be suppressed to a certain level. In addition, since the degree of linear expansion between the core layer and the skin layer, which is a main component for manifesting the mechanical strength of the sandwich panel, is controlled to a certain level, it is possible to reduce the problems that is occurred by expanding or contracting of the core layer and the skin layer as temperature changes.

Accordingly, the sandwich panel according to the present invention can improve the peel strength of the core layer, the skin layer and the adhesive layer by satisfying the relations of the above-mentioned formulas 1 to 4, and can have peel strength in the range of 150 to 200 N, preferably in the range of 160 to 180N. Herein, the peel strength of the core layer is measured on the basis of KSF 4737.

The core layer of the sandwich panel according to the present invention may have a coefficient of linear expansion of 30 to 60 ppm/K and preferably a coefficient of linear expansion of 35 to 55 ppm/K.

The sandwich panel according to the present invention includes a core layer of non-woven fiber structure having a polyester-based fiber and a binder which has an apparent density of 0.5 g/cm³ to 0.8 g/cm³.

In the present invention, the term 'non-woven fiber structure' refers to those formed by bonding a fiber assembly of a web phase or a sheet phase with an adhesive or bonding the fiber assembly using a thermoplastic fiber. Since the core layer according to the present invention has a non-woven fiber structure in which fibers are entangled with each other, all or a part of the polyester-based fibers are fused by the binder, so that natural pores are contained in the core layer, and thus air permeability can be improved and weight lightening can be improved. In other words, since the core layer has natural pores formed by entangling fibers with each other, the core layer is a non-foamed core unlike the case where artificial pores are formed by additives such as foaming agent, and thus the manufacturing cost can be reduced, the foaming process can be omitted, thereby enhancing the process efficiency.

The average length of the polyester-based fibers included in the core layer according to the present invention is preferably 5 to 100 mm. If the average length of the fibers is less than 5 mm, it may be difficult to expect the effect of the high elongation because of the short length of the fibers. On the contrary, if the average length exceeds 100 mm, since the content of fibers that are entangled with each other increases, the space occupied by gaps in the core layer can be reduced. In addition, if the average length exceeds 100 mm, the fibers may not be dispersed smoothly during the manufacture of the core layer, and thus the physical properties of the core layer may be lowered.

The binder contained in the core layer may be a non-hygroscopic copolymer resin or a hygroscopic copolymer resin.

In particular, the non-hygroscopic copolymer resin used in the present invention refers to a resin having a property of not absorbing moisture in the air, and may specifically be a resin having a weight change ratio (i.e., the rate of increase in water content) of the molded article after being left at 85°C and 85% relative humidity for 100 hours of less than 0.1%, preferably less than 0.08%, more preferably less than 0.07%, based on the molded article of the present invention produced by using the resin.

Generally, in view of the fact that the degree of hygroscopicity of the PET fiber contained in the molded article is less than 0.05%, the fact that the weight change ratio of the molded article exceeds 0.05% means that the amount of water absorbed by the binder, which is another constitution in the molded article, is considerable. In this regard, the non-hygroscopic copolymer resin used in the present invention means that it has a low water absorption rate to such an extent that the weight change ratio (i.e., the rate of increase in water content) of the molded article after being left at 85°C and 85% relative humidity for 100 hours is less than 0.1%, preferably less than 0.08%, more preferably less than 0.07%, based on the finally manufactured molded article.

The non-hygroscopic copolymer resin may be a polyester-based fiber and those that satisfy the water absorption rate as described above, which are produced by copolymerizing a diol-based monomer having strong crystallinity and excellent elasticity and an acid component capable of imparting flexibility.

Specifically, the polyester-based fiber may be at least one selected from the group consisting of polyethylene terephthalate (PET), polytrimethylene terephthalate, polybutylene terephthalate, and polyethylene naphthalate, the diol-based monomer may be at least one selected from the group consisting of neopentyl glycol, diethylene glycol, ethylene glycol, poly(tetramethylene) glycol, 1,4-butanediol, 1,3-propanediol, 1,6-hexanediol, 1,4-cyclohexane dimethanol and the like, and the acid component may be at least one selected from the group consisting of isophthalic acid, adipic acid, 2,6-naphthalenedicarboxylic acid, sebacic acid, succinic acid, and the like.

All or a part of the polyester-based fibers contained in the core layer according to the present invention is fused by a binder which is a non-hygroscopic resin, and the binder may have a melting point of 160°C or more.

The core layer according to the present invention has an apparent density of 0.5 to 0.8g/cm$^3$. Since the above-mentioned density range is satisfied, it is possible to have a mechanical strength sufficient for use in the packaging material for large cargoes and the like.

Specifically, the core layer according to the present invention has a flexural strength of 20 MPa to 80 MPa and a tensile strength of 50 to 80 MPa, which is excellent in mechanical strength. The bending strength of the core layer is measured in accordance with ASTM D790, and the tensile strength of the core layer is measured in accordance with ASTM D638.

In addition, the core layer according to the present invention has a flexural modulus of 1.0 to 1.5 GPa and a tensile stiffness of 1.0 to 1.8 GPa that is excellent mechanical rigidity. The flexural modulus of the core layer is measured according to ASTM D790, and the tensile stiffness of the core layer is measured according to ASTM D638.

The core layer according to the present invention has a tensile elongation in a range of 10 to 30%, which is advantageous in that even if an external force acts, the core layer is not easily torn. The tensile elongation of the core layer is measured on the basis of ASTM D638.

Since the core layer according to the present invention satisfies the mechanical strength as described above, it can be included in the sandwich panel and thus used in structural materials for home appliances (TV back covers, washing machine boards, etc.), interior and exterior boards for buildings, interior and exterior materials for cars, interior and exterior materials for trains, ships and airplanes (partition boards, etc.), various partition boards, elevator structural materials and the like.

The core layer according to the present invention may further include a sheath-core type bicomponent fiber. The sheath-core type bicomponent fiber comprises a core part of a polyester-based fiber; and a sheath part which is a non-hygroscopic copolymer resin surrounding the core part. The sheath-core type bicomponent fiber may be included in the core layer according to the present invention, since those that were introduced during the manufacturing step of the core layer according to the present invention are remained in the resin of the sheath part in a non-melted state.

The core part of the sheath-core type bicomponent fiber may be at least one selected from the group consisting of polyethylene terephthalate (PET), polytrimethylene terephthalate, polybutylene terephthalate, and polyethylene naphthalate.

The sheath part of the sheath-core type bicomponent fiber may be the same non-hygroscopic copolymer resin as the binder included in the core layer according to the present invention.

Specifically, the non-hygroscopic copolymer resin refers to a resin which does not absorb moisture in the air, and may specifically be a resin having a weight change ratio (i.e., a rate of increase in water content) of the molded article after being left at 85°C and 85% relative humidity for 100 hours of less than 0.1%, preferably less than 0.08%, more preferably less than 0.07%, based on the molded article of the present invention produced by the resin.

Generally, in view of the fact that the degree of hygroscopicity of the PET fiber contained in the molded article is less than 0.05%, the fact that the weight change ratio of the molded article exceeds 0.05% means that the amount of water absorbed by the binder, which is another constitution in the molded article, is considerable. In this regard, the non-absorbable copolymer resin used in the present invention means that it has a low water absorption rate to such an extent that the weight change ratio (i.e., the rate of increase in water content) of the molded article after being left at 85°C and 85% relative humidity for 100 hours is less than 0.1%, preferably less than 0.08%, more preferably less than 0.07%, based on the finally manufactured molded article.

The non-hygroscopic copolymer resin may be a polyester-based fiber and those that satisfy the water absorption rate, which are produced by copolymerizing a diol-based monomer having strong crystallinity and excellent elasticity and an acid component capable of imparting flexibility.

Specifically, the polyester-based fiber may be at least one selected from the group consisting of polyethylene terephthalate (PET), polytrimethylene terephthalate, polybutylene terephthalate, and polyethylene naphthalate, the diol-based monomer may be at least one selected from the group consisting of neopentyl glycol, diethylene glycol, ethylene glycol, poly(tetramethylene) glycol, 1,4-butanediol, 1,3-propanediol, 1,6-hexanediol, 1,4-cyclohexane dimethanol and the like, and the acid component may be at least one selected from the group consisting of isophthalic acid, adipic acid, 2,6-naphthalenedicarboxylic acid, sebacic acid, succinic acid, and the like.

The sheath-core type bicomponent fiber is prepared by melt spinning and stretching using the core part and the sheath part.

In addition, if the non-hygroscopic resin is used as a sheath component of a sheath-core type bicomponent fiber, flexural strength and tensile strength are improved, and a core layer can be manufactured by a dry process, thereby making it easy to produce a high-density core layer. Also, if the non-hygroscopic resin is used for the packaging material of large cargos and the like, the deflection phenomenon of the non-woven fabric can be prevented because of good physical property and shape retention property even under the high temperature and high humidity atmosphere.

In addition to this, the core layer according to the present invention may further include fillers such as a glass fiber, a carbon fiber, a polymer fiber and the like. Also, flame retardants such as a brominated organic flame retardant may be further included. In addition to this, additives such as an impact modifier and a heat stabilizer may be further included.

The manufacturing method of the core layer may include,

a) preparing a non-woven fabric by mixing (A) a polyester-based fiber and (B) a sheath-core type bicomponent fiber including a core part of a polyester-based fiber and a sheath part that is a non-hygroscopic copolymer resin surrounding the core part, and then heating and pressurizing the result; b) installing the prepared non-woven fabric on a plurality of unwinding devices, and then moving to a heating press; and c) manufacturing a core layer by heating and pressurizing a plurality of the non-woven fabrics moved to the heating press under a temperature condition of 170°C to 210°C and a pressure condition of 1 MPa to 10 MPa.

First, in a), a non-woven fabric is prepared by mixing (A) a polyester-based fiber and (B) a sheath-core type bicomponent fiber including a core part of a polyester-based fiber and a sheath part that is a non-hygroscopic copolymer resin surrounding the core part, and then heating and pressurizing the result.

In a), (A) the polyester-based fiber and B) the sheath-core type bicomponent fiber may be mixed in a weight ratio of 1:99 to 80:20, and used. When the content of B) the sheath-core type bicomponent fiber is less than the above-mentioned range, fusion between fibers is not sufficient declining properties of the non-woven fabric.

In a), common methods of preparing a non-woven fabric may be used as the method of preparing the non-woven fabric through heating and pressurizing, and as one example, the non-woven fabric may be prepared by carding mixed fibers using a roller carding machine, and then thermal bonding the result for 5 seconds to 30 seconds at a temperature of 16C°C to 210°C using a heating press.

Next, in b), the prepared non-woven fabric is installed on a plurality of unwinding devices, and then moved to a heating press.

After installing 2 to 10 of the non-woven fabrics prepared in b) on a plurality of unwinding devices matching the number, the non-woven fabrics may be moved to a heating press for manufacturing a core layer. When using a plurality of non-woven fabrics using a plurality of unwinding devices as above, the thickness of each of the non-woven fabrics becomes small, and the length of the non-woven fabric wound on one unwinding device becomes long. Accordingly, the number of the use of joining machine for linking the non-woven fabrics continuously introduced during a continuous process may be reduced leading to an advantage of simplifying the process.

Then, in c), a plurality of the non-woven fabrics moved to the heating press are heated and pressurized under a temperature condition of 170°C to 210°C and a pressure condition of 1 MPa to 10 MPa to manufacture a core layer.

The heating press used in c) is not particularly limited as long as it is commonly used in the art, and as one specific example, a double belt press and the like may be used.

The core layer manufactured in c) may be manufactured to a thickness of 0.1 mm to 10 mm. The thickness being less than 0.1 mm has a problem in that excellent mechanical strength is difficult to maintain, and the thickness being greater than 10 mm has a problem in that moldability declines when bending the core layer or when deep drawing molding. Properties of the manufactured core layer are the same as the properties of the core layer of the present invention described above.

In addition, the method for manufacturing a core layer may further include, between b) and c), d) preheating for 3 minutes to 10 minutes under a temperature condition of 160°C to 210°C.

When further including preheating as above, heat energy is applied in advance to the non-hygroscopic copolymer resin of the sheath part of the sheath-core type bicomponent fiber in the non-woven fabric, and therefore, there is an advantage in that the time of the heating and pressurizing process in c) may be shortened.

The thickness of the core layer according to the present invention is preferably 0.1 to 10 mm. If the thickness is less than 0.1 mm, there is a problem that it is difficult to maintain excellent mechanical strength. If the thickness exceeds 10 mm, there is a problem that moldability is deteriorated when the sandwich panel is bent or deep drawing is performed.

The skin layer 20 of the sandwich panel according to the present invention may be formed of a metal material and preferably may be formed of at least one selected from the group consisting of aluminum, iron, stainless steel (SUS), magnesium and electro galvanized steel sheet (EGI). As an example, the skin layer 20 comprising an electro galvanized steel sheet (EGI) can be applied to the sandwich panel to have good formability and bending strength. In addition, the skin layer 20 containing aluminum can be applied to the sandwich panel to achieve weight lightening.

The thickness of the skin layer 20 may be 0.1 to 0.5 mm. If the thickness is less than 0.1 mm, it is difficult to maintain the structural rigidity of the skin layer. If the thickness is more than 0.5 mm, the lightening effect of the sandwich panel is reduced, and the raw material cost increases.

The adhesive layer of the sandwich panel according to the present invention is applied between the core layer 10 and the skin layer 20 to bond the core layer 10 and the skin layer 20 together. It is preferable that the adhesive layer is applied in a uniform thickness in consideration of viscosity. In the present invention, the core layer 10 and the skin layer 20 are laminated and then cured to produce the sandwich panel, or the core layer 10 and the skin layer 20 are laminated and then thermally compressed to produce the sandwich panel. At this time, during the curing or thermal compression, the adhesive has an effect of enhancing the adhesive strength between the skin layer 20 and the core layer 10 by mechanical bonding as well as chemical bonding with the components forming the core layer 10 while penetrating into the core layer 10. The chemical bonding means that the adhesive is bonded to the upper and lower surfaces of the core layer by covalent bond, hydrogen bond, van der Waals bond, ionic bond, or the like.

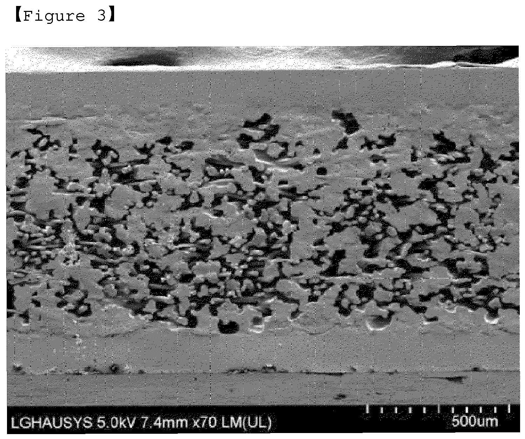

The mechanical bond refers to a form in which the adhesive seeps into the core layer and is physically hooked thereto as if the rings are interdigitated with each other. This form is also called mechanical interlocking. Reffering Fig. 3, due to the natural pores contained in the core layer 10, the adhesive seeps into the upper and lower surfaces of the core layer 10.

The adhesive constituting the adhesive layer may include at least one of an olefin-based adhesive, a urethane-based adhesive, an acrylic-based adhesive, and an epoxy-based adhesive. The olefin-based adhesive may be at least one selected from the group consisting of polyethylene, polypropylene, and amorphous polyalphaolefin adhesive. The urethane-based adhesive can be used without limitation as long as it is an adhesive containing a urethane structure (-NH-CO-O-). The acrylic-based adhesive may include at least one of a polymethylmethacrylate adhesive, a hydroxy group-containing polyacrylate adhesive, and a carboxyl group-containing polyacrylate adhesive. The epoxy-based adhesive may be at least one of a bisphenol-A type epoxy adhesive, a bisphenol-F type epoxy adhesive, a novolac epoxy adhesive, a linear aliphatic epoxy resin adhesive, or a cycloaliphatic epoxy resin adhesive.

In addition, the adhesive may comprise a photocurable adhesive, a hot melt type adhesive, or a thermosetting adhesive, and any one of a photocuring method and a thermosetting method may be used. For example, a sandwich panel can be manufactured by thermosetting a laminate including a skin layer, a core layer, and an adhesive. The thermosetting may be performed at a curing temperature of 50 to 110°C for about 5 minutes to 2 hours, and also curing may be performed at room temperature for about 1 to 10 hours.

The adhesive layer may be applied in a thickness of about 20 to 300 $\mu$m) but is not limited thereto.

The method of applying the adhesive layer to one side of the skin layer 20 may be any one selected from a die coating method, a gravure coating method, a knife coating method, and a spray coating method.

The sandwich panel according to the present invention is formed by sequentially laminating the skin layer 20, the core layer 10 and the skin layer 20, and the adhesive layer is applied and formed between the core layer 10 and the skin layer 20. After the above configurations have been laminated, the curing and compression steps may be performed, but are not limited thereto.

As mentioned above, the sandwich panel according to the present invention has excellent mechanical strength as well as formability by using a core layer having good mechanical physical properties. In addition, the transverse shear rigidity and deflection degree of the panel are improved, and thus it is suitable to use in structural materials for home appliances (TV back covers, washing machine boards, etc.), interior and exterior boards for buildings, interior and exterior materials for cars, interior and exterior materials for trains, ships and airplanes (partition boards, etc.), various partition boards, elevator structural materials and the like.

Hereinafter, preferred examples will be provided in order to illuminate the present invention, however, the following examples are for illustrative purposes only, and it will be obvious to those skilled in the art that various changes and modifications may be made within the category and technological ideas of the present invention, and such changes and modifications also belong to the attached claims.

**Example: Examples 1 to 3 and Comparative Examples 1 to 3**

**(1) Manufacture of core layer**

[Manufacturing Example 1]

A polyethylene terephthalate (PET) fiber (Toray Chemical, RPF, Fineness of 4 deniers, Fiber length of 51 mm) and a sheath-core type PET fiber (TORAY CHEMICAL, EZBON-L, Fineness of 4 deniers, Sheath part melting point of 164°C, Fiber length of 64 mm) as a sheath part, which is a non-hygroscopic resin, were prepared and they were mixed at a weight ratio of 30:70.

The mixed fibers were carded with a carding machine and heat-sealed at a temperature of 190 °C for 10 seconds using a hot press to produce a nonwoven fabric.

After the nonwoven fabric was mounted on six unwinders, six nonwoven fabrics were placed in a preheating chamber having a temperature of 180 °C in the chamber and then preheated for 3 minutes.

Thereafter, the non-woven fabric was transferred to a double belt press at a speed of 5 m/min. At this time, the heating temperature of the double belt press was 180°C and the pressure was 5 MPa. The core layer of 4 mm thickness was manufactured by heating/pressurizing for 2 minutes.

[Manufacturing Example 2]

A core layer was prepared in the same manner as in Example 1, except that polyethylene terephthalate (PET) fibers and sheath-core type PET fibers (sheath part is non-hygroscopic), were mixed at a weight ratio of 50:50.

[Manufacturing Example 3]

A core layer was prepared in the same manner as in Example 1, except that a sheath-core type PET fiber (TORAY CHEMICAL, EZBON-L, fineness 4 denier, melting point of sheath 110°C, fiber length 64 mm), which is a non-hygroscopic resin, was used.

[Comparative Manufacturing Example 1]

A polyethylene terephthalate (PET) fiber (Toray Chemical, RPF, Fineness of 4 deniers, Fiber length of 51 mm) were carded with a roller carder and thermally adhered at 190 °C for 10 seconds using a hot press to produce a nonwoven fabric.
After the seven nonwoven fabrics were prepared, a polyester-based hot-melt adhesive film (chemitec KOREA, PE) as a hygroscopic copolymer was placed between the respective nonwoven fabrics, and then the nonwoven fabric was subjected to a double belt press at a speed of 5 m/min. At this time, the heating temperature of the double belt press was 110 °C and the pressure was 5 MPa, and the core layer having a thickness of 4 mm was produced by heating / pressurizing for 2 minutes.

[Comparative Manufacturing Example 2]

After mixing a glass fiber to a polyethylene terephthalate (PET) fiber (Toray Chemical Inc., RPF, fineness 4 denier, fiber length 51 mm) in a weight ratio of 1:1, the result went through carding using a roller carding machine to prepare a card web, and then after overlapping 6 of these webs, the result was transferred to a conveyer belt equipped with a steam spray nozzle. After that, high temperature steam was sprayed from the steam spray nozzle in a thickness direction of the card web, and the result was passed through a web thickness adjusting roll to manufacture a molded object having a thickness of 4 mm.

[Comparative Manufacturing Example 3]

Instead of PET fiber, a mixture of polyethylene (PE) resin and magnesium hydroxide ($Mg(OH)_2$) was extruded to prepare a core layer having a thickness of 4 mm at a melting point of 130 °C.

**(2) Manufacture of sandwich panel**

[Example 1]

An epoxy adhesive (Kukdo Chemical) was applied to both sides of the prepared core layer, and then an aluminum skin layer (AL 3003) formed of electro galvanized steel sheet was formed to a thickness of 0.5 mm. Thereafter, the laminate resulted was thermosetted at 100°C to produce a sandwich panel.

[Example 2]

A sandwich panel was manufactured in the same manner as in Example 1 except that the core layer manufactured in manufacturing Example 2 was used.

[Example 3]

A sandwich panel was manufactured in the same manner as in Example 1 except that the core layer manufactured in manufacturing Example 3 was used.

[Comparative Example 1]

A sandwich panel was manufactured in the same manner as in Example 1, except that the core layer manufactured in Comparative manufacturing Example 1 was used.

[Comparative Example 2]

A sandwich panel was manufactured in the same manner as in Example 1, except that the core layer manufactured in Comparative manufacturing Example 2 was used.

[Comparative Example 3]

A sandwich panel was manufactured in the same manner as in Example 1 except that the core layer manufactured in Comparative manufacturing Example 3 was used.

**Experimental Example: Measurement of physical property of panel**

After preparing each of the sandwich panel manufactured in Examples 1 to 3 and Comparative Examples 1 to 3 into a specimen, measurements were made using the following methods, and the results are shown in the following Table 1.

(1) Flexural strength (MPa): Flexural strength of sandwich panel were measured based on the ASTM C393.
(2) flexural modulus (GPa): flexural modulus of sandwich panel were measured based on the ASTM C393.
(3) Bending strength (N/mm$^2$) : Bending strength of sandwich panel with 3-point-bending were measured based on the KS F4737.
(4) Lightening weighting ratio (%): The lightening ratio was measured on the basis of the same metal of the same thickness as in the above examples.
(5) Coefficient of linear expansion (ppm/K): The coefficient of linear expansion (ACL) of the adhesive layer, the coefficient of linear expansion (CCL) of the core layer, and the coefficient of linear expansion (SCL) of the skin layer were measured using TMA-SDTA 841 equipment (Mettler Toledo) for a specimen of 15 mm x 6 mm x 0.5 mm.
(6) Surface roughness (Ra, $\mu$m): The prepared specimen was manufactured to a size of 300 mm x 300 mm, and then a surface roughness measuring instrument (Mitutoyo SJ-210 model) was placed. Surface roughness (Ra) was measured, and the surface roughness parameter Ra (mu m) was numerically expressed.
(7) Peel-off strength (N) : The prepared specimen was manufactured to a size of 300 mm $\times$ 25 mm, and then measurements were made 2 times based on the KSF 4737 with a test speed of 70 mm/min.

[Table 1]

| | Example | | | Comparative Example | | |
|---|---|---|---|---|---|---|
| | 1 | 2 | 3 | 1 | 2 | 3 |
| Flexural strength | 293 | 285 | 275 | 261 | 262 | 177 |
| flexural modulus | 170 | 168 | 160 | 150 | 152 | 102 |
| Bending strength | 118 | 112 | 109 | 101 | 99 | 71 |
| Lightening weighting ratio | 44 | 44 | 43 | 43 | 42 | 60 |
| SCL | 9.12 | 9.21 | 9.31 | 9.23 | 9.29 | 9.17 |
| CCS | 36.07 | 39.12 | 43.87 | 61.28 | 72.1 | 79.4 |
| ACL | 93.21 | 91.33 | 92.23 | 92.34 | 93.21 | 92.11 |
| ACL/CCL | 2.58 | 2.33 | 2.10 | 1.51 | 1.29 | 1.16 |
| CCL/SCL | 3.96 | 4.25 | 4.71 | 6.64 | 7.76 | 8.66 |
| Surface roughness | 8 | 9 | 7 | 13 | 12 | 4 |
| Peel-off strength 1st | 169.5 | 171.2 | 167.3 | 152.3 | 149.1 | 147.8 |
| Peel-off strength 2rd | 175.3 | 172.3 | 168.9 | 153.7 | 150.3 | 147.4 |

As shown in Table 1, in the case of the sandwich panels of Examples 1 to 3, not only the Flexural strength, flexural modulus, Bending strength and Lightening weighting ratio was increased but also the Peel-off strength increased and the peel strength remarkably increased. It can be seen that this result is due to the fact that the mechanical strength of the sandwich panel is improved by controlling the surface roughness of the core layer to a certain level by including the core layer having excellent mechanical strength.

On the other hand, in Comparative Examples 1 to 3 in which the surface roughness does not satisfy the range of the present invention, unlike the sandwich panel of the present invention, it can be confirmed that the peel strength is relatively lower than the results of Examples 1 to 3.

**Claims**

1. A sandwich panel comprising
   a core layer of non-woven fiber structure having a polyester-based fiber and a binder which has an apparent density of 0.5 g/cm$^3$ to 0.8 g/cm;
   a skin layer laminated on at least one surface of the core layer; and
   an adhesive layer for bonding the core layer and the skin layer,
   wherein the surface roughness(Ra) of the core layer is a range of 5 to 10$\mu$m.

2. The sandwich panel of Claim 1, wherein the surface roughness (Ra) of the core layer is a range of 6 to 9$\mu$m.

3. The sandwich panel of Claim 1, wherein a coefficient of linear expansion of the adhesive layer (ACL: Adhesive Coefficient of Linear expansion), a coefficient of linear expansion of the core layer (CCL: Core Coefficient of Linear expansion), and a coefficient of linear expansion of the skin layer (SCL: Skin Coefficient of Linear expansion) satisfy equation 1 and equation 2 below.

$$[\text{Equation 1}]$$
$$1.6 \leq ACL/CCL \leq 3.0$$

$$[\text{Equation 2}]$$
$$3.0 \leq CCL/SCL \leq 6.5$$

4. The sandwich panel of Claim 1, wherein a coefficient of linear expansion of the adhesive layer (ACL: Adhesive Coefficient of Linear expansion), a coefficient of linear expansion of the core layer (CCL: Core Coefficient of Linear expansion), and a coefficient of linear expansion of the skin layer (SCL: Skin Coefficient of Linear expansion) satisfy equation 3 and equation 4 below.

$$[\text{Equation 3}]$$
$$2.0 \leq ACL/CCL \leq 2.7$$

$$[\text{Equation 4}]$$
$$3.5 \leq CCL/SCL \leq 5.0$$

5. The sandwich panel of Claim 1, wherein the binder is non-hygroscopic copolymer resin or hygroscopic copolymer resin.

6. The sandwich panel of Claim 1, wherein the polyester-based fiber has a melting point of 180 to 300°C.

7. The sandwich panel of Claim 1, wherein the core layer has a flexural strength of 20 MPa or greater, a tensile strength of 50 MPa to 80 MPa, a flexural modulus of 1.0 GPa to 1.5 GPa and a tension stiffness of 1.0 GPa to 1.8 GPa, a tensile elongation of 10% to 30% and a peel-off strength of 150 N to 200 N.

8. The sandwich panel of Claim 1, wherein the polyester-based fiber is any one or more selected from the group consisting of polyethylene terephthalate (PET), polytrimethylene terephthalate, polybutylene terephthalate and polyethylene naphthalate.

9. The sandwich panel of Claim 5, wherein the non-hygroscopic copolymer resin has a weight change rate of less than 0.1% after keeping a constant temperature/constant humidity for 100 hours at a temperature of 85°C and relative humidity of 85%.

10. The sandwich panel of Claim 1, wherein the binder has a melting point of 160°C or higher.

11. The sandwich panel of Claim 1, further comprising a sheath-core type bicomponent fiber including a core part of a polyester-based fiber; and a sheath part which is a non-hygroscopic copolymer resin surrounding the core part.

12. The sandwich panel of Claim 11, wherein the polyester-based fiber is any one or more selected from the group consisting of polyethylene terephthalate (PET), polytrimethylene terephthalate, polybutylene terephthalate and polyethylene naphthalate.

13. The sandwich panel of Claim 11, wherein the sheath part which is a non-hygroscopic copolymer resin has an absorption rate (JIS K-7209) of 1.0% or less.

14. The sandwich panel of claim 1, wherein the thickness of the core layer is a range of 0.1 to 10mm and the thickness of the skin layer is a range of 0.1 to 0.5mm.

15. The sandwich panel of claim 1, wherein the skin layer is at least one selected from the group consisting of aluminum, iron, stainless steel (SUS), magnesium and electro galvanized steel sheet (EGI).

16. The sandwich panel of claim 1, wherein the adhesive layer includes at least one of an olefin-based adhesive, a urethane-based adhesive, an acrylic-based adhesive, and an epoxy-based adhesive.

**Patentansprüche**

1. Sandwichplatte, umfassend:

   eine Kernschicht aus Vliesfaserstruktur mit einer Faser auf Polyesterbasis und einem Bindemittel, die eine Schüttdichte von 0,5 g/cm$^3$ bis 0,8 g/cm$^3$ aufweist;
   eine Hautschicht, die auf wenigstens eine Oberfläche der Kernschicht laminiert ist; und
   eine Haftschicht zum Binden der Kernschicht und der Hautschicht,
   wobei die Oberflächenrauhigkeit (RA) der Kernschicht in einem Bereich von 5 bis 10 µm ist.

2. Sandwichplatte nach Anspruch 1, wobei die Oberflächenrauhigkeit (RA) der Kernschicht in einem Bereich von 6 bis 9 µm ist.

3. Sandwichplatte nach Anspruch 1, wobei ein linearer Ausdehnungkoeffizient der Haftschicht (ACL: linearer Haftausdehnungskoeffizient), ein linearer Ausdehnungskoeffizient der Kernschicht (CCL: linearer Kernausdehnungskoeffizient) und ein linearer Ausdehnungskoeffizient der Hautschicht (SCL: linearer Hautausdehnungskoeffizient) Gleichung 1 und Gleichung 2 unten erfüllen:

$$[\text{Gleichung 1}]$$

$$1{,}6 \leq ACL/CCL \leq 3{,}0$$

$$[\text{Gleichung 2}]$$

$$3{,}0 \leq CCL/SCL \leq 6{,}5.$$

4. Sandwichplatte nach Anspruch 1, wobei ein linearer Ausdehnungskoeffizient der Haftschicht (ACL: linearer Haftausdehnungskoeffizient), ein linearer Ausdehnungskoeffizient der Kernschicht (CCL: linearer Kernausdehnungskoeffizient) und ein linearer Ausdehnungskoeffizient der Hautschicht (SCL: linearer Hautausdehnungskoeffizient) Gleichung 3 und Gleichung 4 unten erfüllen:

[Gleichung 3]

$$2,0 \leq ACL/CCL \leq 2,7$$

[Gleichung 4]

$$3,5 \leq CCL/SCL \leq 5,0.$$

5. Sandwichplatte nach Anspruch 1, wobei das Bindemittel ein nicht hygroskopes Copolymerharz oder ein hygroskopes Copolymerharz ist.

6. Sandwichplatte nach Anspruch 1, wobei die Faser auf Polyesterbasis einen Schmelzpunkt von 180 bis 300°C aufweist.

7. Sandwichplatte nach Anspruch 1, wobei die Kernschicht eine Biegefestigkeit von 20 mPa oder größer, eine Zugfestigkeit von 50 MPa bis 80 MPa, einen Biegemodul von 1,0 GPa bis 1,5 GPa und eine Zugsteifigkeit von 1,0 GPa bis 1,8 GPa, eine Zugdehnung von 10% bis 30% und eine Abziehfestigkeit von 150 N bis 200 N aufweist.

8. Sandwichplatte nach Anspruch 1, wobei die Faser auf Polyesterbasis eine oder mehrere ist, ausgewählt aus der Gruppe bestehend aus Polyethylenterephthalat (PET), Polytrimethylenterephthalat, Polybutylenterephthalat und Polyethylennaphthalat.

9. Sandwichplatte nach Anspruch 5, wobei das nicht hygroskope Copolymerharz eine Gewichtsveränderungsrate von weniger als 0,1% nach Halten bei einer konstanten Temperatur/konstanten Feuchtigkeit für 100 Stunden bei einer Temperatur von 85°C und einer relativen Feuchtigkeit von 85% aufweist.

10. Sandwichplatte nach Anspruch 1, wobei das Bindemittel einen Schmelzpunkt von 160°C oder höher aufweist.

11. Sandwichplatte nach Anspruch 1, weiter umfassend eine Mantel-Kern-artige Zweikomponentenfaser, die ein Kernteil einer Faser auf Polyesterbasis; und einen Mantelteil einschließt, der ein nicht hygroskopes Polymerharz ist, das den Kernteil umgibt.

12. Sandwichplatte nach Anspruch 11, wobei die Faser auf Polyesterbasis eine oder mehrere ist, ausgewählt aus der Gruppe bestehend aus Polyethylenterephthalat (PET), Polytrimethylenterephthalat, Polybutylenterephthalat und Polyethylennaphthalat.

13. Sandwichplatte nach Anspruch 11, wobei der Mantelteil, der ein nicht hygroskopes Polymerharz ist, eine Absorptionsrate (JISK-7209) von 1,0% oder weniger aufweist.

14. Sandwichplatte nach Anspruch 1, wobei die Dicke der Kernschicht in einem Bereich von 0,1 bis 10 mm und die Dicke der Hautschicht in einem Bereich von 0,1 bis 0,5 mm ist.

15. Sandwichplatte nach Anspruch 1, wobei die Hautschicht wenigstens eine ist, ausgewählt aus der Gruppe bestehend aus Aluminium, Eisen, rostfreiem Stahl (SOS), Magnesium und Elektro-galvanisiertem Stahlblech (EGI).

16. Sandwichplatte nach Anspruch 1, wobei die Haftschicht wenigstens eines eines Haftmittels auf Olefinbasis, eines Haftmittels auf Urethanbasis, eines Haftmittels auf Acrylbasis und eines Haftmittels auf Epoxybasis einschließt.

**Revendications**

1. Panneau sandwich comprenant
une couche centrale de structure fibreuse non tissée ayant une fibre à base de polyester et un liant qui a une densité apparente de 0,5 g/cm$^3$ à 0,8 g/cm ;
une couche supérieure laminée sur au moins une surface de la couche centrale ; et
une couche adhésive pour relier la couche centrale et la couche supérieure,
dans lequel la rugosité de surface (Ra) de la couche centrale est comprise dans une plage de 5 à 10 $\mu$m.

2. Panneau sandwich selon la revendication 1, dans lequel la rugosité de surface (Ra) de la couche centrale est comprise dans une plage de 6 à 9 $\mu$m.

3. Panneau sandwich selon la revendication 1, dans lequel un coefficient d'expansion linéaire de la couche adhésive (ACL : *Adhesive Coefficient of Linear expansion),* un coefficient d'expansion linéaire de la couche centrale (CCL : *Core Coefficient of Linear expansion*), et un coefficient d'expansion linéaire de la couche supérieure (SCL : *Skin Coefficient of Linear expansion)* satisfont à l'équation 1 et à l'équation 2 ci-dessous.

$$[\text{Équation 1}]$$

$$1,6 \leq ACL / CCL \leq 3,0$$

$$[\text{Équation 2}]$$

$$3,0 \leq CCL / SCL \leq 6,5$$

4. Panneau sandwich selon la revendication 1, dans lequel un coefficient d'expansion linéaire de la couche adhésive (ACL : *Adhesive Coefficient of Linear expansion),* un coefficient d'expansion linéaire de la couche centrale (CCL : *Core Coefficient of Linear expansion*), et un coefficient d'expansion linéaire de la couche supérieure (SCL : *Skin Coefficient of Linear expansion)* satisfont à l'équation 3 et à l'équation 4 ci-dessous.

$$[\text{Équation 3}]$$

$$2,0 \leq ACL / CCL \leq 2,7$$

$$[\text{Équation 4}]$$

$$3,5 \leq CCL / SCL \leq 5,0$$

5. Panneau sandwich selon la revendication 1, dans lequel le liant est une résine copolymère non hygroscopique ou une résine copolymère hygroscopique.

6. Panneau sandwich selon la revendication 1, dans lequel la fibre à base de polyester a un point de fusion de 180 à 300 °C.

7. Panneau sandwich selon la revendication 1, dans lequel la couche centrale a une résistance à la flexion de 20 MPa ou supérieure, une résistance à la traction de 50 MPa à 80 MPa, un module d'élasticité en flexion de 1,0 GPa à 1,5 GPa et une résistance en tension de 1,0 GPa à 1,8 GPa, un allongement en traction de 10 % à 30 % et une résistance au pelage de 150 N à 200 N.

8. Panneau sandwich selon la revendication 1, dans lequel la fibre à base de polyester est l'une quelconque ou plusieurs sélectionnées dans le groupe constitué de téréphtalate de polyéthylène (PET), de téréphtalate de polytriméthylène, de téréphtalate de polybutylène et de naphtalate de polyéthylène.

9. Panneau sandwich selon la revendication 5, dans lequel la résine copolymère non hygroscopique présente un taux de changement de poids de 0,1 % après avoir maintenu une température constante/une humidité constante pendant 100 heures à une température de 85 °C et à une humidité relative de 85 %.

10. Panneau sandwich selon la revendication 1, dans lequel le liant a un point de fusion de 160 °C ou supérieur.

11. Panneau sandwich selon la revendication 1 comprenant en outre une fibre bicomposante de type à noyau et gaine contenant une partie noyau d'une fibre à base de polyester ; et une partie gaine qui est une résine copolymère non hygroscopique enrobant la partie noyau.

12. Panneau sandwich selon la revendication 11, dans lequel la fibre à base de polyester est une fibre quelconque ou plusieurs fibres sélectionnées dans le groupe constitué de téréphtalate de polyéthylène (PET), de téréphtalate de polytriméthylène, de téréphtalate de polybutylène et de naphtalate de polyéthylène.

13. Panneau sandwich selon la revendication 11, dans lequel la partie de gaine qui est une résine copolymère non hydroscopique présente un taux d'absorption (JIS K-7209) de 1,0 % ou inférieur.

14. Panneau sandwich selon la revendication 1, dans lequel l'épaisseur de la couche interne est comprise dans la plage de 0,1 à 10 mm et l'épaisseur de la couche supérieure est comprise dans la plage de 0,1 à 0,5 mm.

15. Panneau sandwich selon la revendication 1, dans lequel la couche supérieure est au moins une couche sélectionnée dans le groupe constitué d'aluminium, de fer, d'acier inoxydable (SUS), de magnésium et de tôle d'acier électro-galvanisé (EGI).

16. Panneau sandwich selon la revendication 1, dans lequel la couche adhésive contient au moins un composant parmi un adhésif à base d'oléfine, un adhésif à base d'uréthane, un adhésif à base acrylique et un adhésif à base d'époxy.

【Figure 1】

【Figure 2】

LGHAUSYS 5.0kV 10.4mm x100 LM(UL)    500um

【Figure 3】

**EP 3 470 218 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 101500036